# FASCICULE DE BREVET EUROPEEN

(11) **EP 3 446 060 B1**
(45) Date de publication et mention de la délivrance du brevet: **22.07.2020**
(21) Numéro de dépôt: 17721967.2
(22) Date de dépôt: 19.04.2017
(51) Int. Cl.: F28D 17/00, F28D 17/02, F28D 20/00, C04B 35/26

(54) **PRODUIT FRITTE A HAUTE TENEUR EN OXYDE DE FER**
SINTERPRODUKT MIT HOHEM EISENOXIDGEHALT
SINTERED PRODUCT WITH HIGH IRON OXIDE CONTENT

(30) Priorité: 19.04.2016 FR 1653467
(43) Date de publication de la demande: 27.02.2019
(73) Titulaire: SAINT-GOBAIN CENTRE DE RECHERCHES ET D'ETUDES EUROPEEN, 92400 Courbevoie (FR)
(72) Inventeur: HIS, Christian, 84300 CAVAILLON (FR); VILLERMAUX, Franceline, 84000 AVIGNON (FR)
(74) Mandataire: Nony
(86) Numéro de dépôt international: PCT/EP2017/059273
(87) Numéro de publication internationale: WO 2017/182514

(56) Documents cités:
- EP-A1- 3 015 439
- WO-A1-2013/005196
- WO-A2-2013/093819
- FR-A1- 2 977 660
- FR-A1- 2 988 168
- FR-A1- 3 026 473

## Description

### Domaine technique

L'invention se rapporte à un matériau fritté destiné à la fabrication de particules, elles-mêmes destinées à la fabrication d'un produit fritté.

Le produit réfractaire fritté est en particulier destiné à constituer des éléments de stockage d'énergie dans une unité de stockage d'énergie calorifique, appelée « unité de stockage thermique ».

### Etat de la technique

Une installation thermique peut comporter une unité produisant de l'énergie calorifique, un consommateur d'énergie calorifique et une unité de stockage de cette énergie calorifique. Le stockage de l'énergie calorifique permet de décaler dans le temps sa production et sa consommation.

Le stockage de l'énergie calorifique est également utile pour valoriser les énergies douces, comme l'énergie solaire, renouvelables mais dont la production est intermittente. Le stockage de l'énergie peut également être utile pour tirer profit des écarts de prix de l'électricité entre les heures dites « creuses » durant lesquelles les tarifs de l'électricité sont les moins élevés, et les heures dites « pleines » durant lesquelles les tarifs sont les plus élevés. Par exemple, dans le cas de stockage d'énergie par compression d'air, générant de l'énergie calorifique qui est stockée dans une unité de stockage thermique, les phases de compression consommant de l'électricité sont avantageusement réalisées à moindre coût pendant les heures creuses, tandis que les phases de détente produisant de l'électricité sont réalisées pendant les heures pleines, afin de fournir de l'électricité qui peut être injectée dans le réseau électrique, en fonction de la demande, à un tarif avantageux.

L'énergie calorifique peut être stockée dans des éléments de stockage d'énergie calorifique d'une unité de stockage thermique. Les éléments de stockage d'énergie peuvent être en vrac (« *média* » en anglais) sous la forme d'un lit (« *packed bed* » en anglais), par exemple un lit de cailloux, ou être empilés de manière ordonnée, classiquement sous la forme d'un empilement de briques.

On connaît en particulier des éléments de stockage d'énergie frittés, à haute teneur en oxyde de fer.

L'opération de stockage, par échange thermique entre un courant de fluide caloporteur et l'unité de stockage thermique, se nomme classiquement « la charge », le fluide caloporteur entrant dans l'unité de stockage thermique lors de la charge étant appelé « fluide caloporteur de charge ».

La capacité de stockage est notamment dépendante de la composition chimique, de la masse volumique relative, de la quantité de matériau de stockage d'énergie par unité de volume et de la capacité thermique massique du matériau de stockage d'énergie. Typiquement, pour disposer d'une capacité suffisante, la fraction volumique de vide est inférieure ou égale à 60%, à la différence des régénérateurs, et en particulier des régénérateurs utilisés dans l'industrie verrière.

L'énergie calorifique stockée peut ensuite être restituée, par échange thermique entre un courant de fluide caloporteur et les éléments de stockage d'énergie. Cette opération se nomme classiquement « la décharge », le fluide caloporteur entrant dans l'unité de stockage thermique lors de la décharge étant appelé « fluide caloporteur de décharge ».

L'article « A review on packed bed solar energy storage systems », Renewable and Sustainable Energy Reviews, 14 (2010), p 1059-1069, décrit l'état de la technique dans le domaine des unités de stockage thermique, et notamment l'influence de certains paramètres sur l'efficacité desdites unités de stockage thermique.

Il existe un besoin permanent pour améliorer l'efficacité d'une unité de stockage thermique. Ce besoin est d'autant plus sensible que les réglementations environnementales et le souci de maîtriser les dépenses incitent les industries à rechercher toujours plus d'économies d'énergie.

Un but de l'invention est de satisfaire, au moins partiellement, ce besoin.

### Résumé de l'invention

L'invention propose un matériau fritté présentant la composition chimique suivante, en pourcentages massiques :
- oxyde(s) de fer, exprimé sous la forme Fe₂O₃ ≥ 85%
- CaO : 0,1% - 6%, et
- SiO₂ : 0,1% - 6%, et
- 0,05 % ≤ TiO₂, et
- 0 ≤ Al₂O₃, et
- TiO₂ + Al₂O₃ ≤ 3%, et
- constituants autres que les oxydes de fer, CaO, SiO₂, TiO₂ et Al₂O₃ : ≤ 5%, le rapport massique CaO/SiO₂ étant compris entre 0,2 et 7,
le rapport massique TiO₂/CaO étant compris entre 0,2 et 1,5.

Comme on le verra plus en détail dans la suite de la description, un matériau fritté selon l'invention présente des masses volumiques apparente et relative élevées. Il est ainsi parfaitement adapté pour la fabrication de particules et d'un mélange particulaire destiné à la fabrication d'un élément de stockage d'énergie (ou « mélange particulaire selon l'invention »). En particulier, il est parfaitement adapté pour la fabrication de la fraction grossière d'un tel mélange particulaire.

Le matériau présente de préférence une ou plusieurs des caractéristiques optionnelles suivantes :
- le matériau présente une masse volumique relative supérieure ou égale à 90% ;
- le matériau présente une taille moyenne de grains de préférence inférieure à 100 µm et supérieure à 0,5 µm ;
- le matériau présente
   - une teneur en oxyde de fer, exprimée sous la forme Fe₂O₃ supérieure à 88%; et/ou
   - une teneur en CaO supérieure à 0,2% et inférieure à 4%; et/ou
   - une teneur en SiO₂ supérieure à 0,2% et inférieure à 6% ; et/ou
   - une teneur en TiO₂ supérieure à 0,1% et inférieure à 3% ; et/ou
   - une teneur en Al₂O₃ supérieure à 0,1% et inférieure à 2,5% ; et/ou
   - une teneur totale en TiO₂ + Al₂O₃ supérieure à 0,2% et inférieure à 2,5% ; et/ou
   - un rapport massique CaO/SiO₂ supérieur à 0,4 et inférieur à 6,5 ; et/ou
   - un rapport massique TiO₂/CaO supérieur à 0,3 et inférieur à 1,4 ; et/ou
   - une teneur en constituants autres que les oxydes de fer, CaO, SiO₂, TiO₂ et Al₂O₃ inférieure à 4% ; et/ou
   - une teneur en oxyde de manganèse, exprimée sous la forme MnO, supérieure à 0,1% et inférieure à 3% ;
- le matériau présente
   - une teneur en oxyde de fer, exprimée sous la forme Fe₂O₃ supérieure à 92%; et/ou
   - une teneur en CaO supérieure à 0,3% et inférieure à 2%; et/ou
   - une teneur en SiO₂ supérieure à 0,4% et inférieure à 3% ; et/ou
   - une teneur en TiO₂ supérieure à 0,3% et inférieure à 2,5% ; et/ou
   - une teneur en Al₂O₃ inférieure à 1,5% ; et/ou
   - une teneur totale en TiO₂ + Al₂O₃ supérieure à 0,3% et inférieure à 2% ; et/ou
   - un rapport massique CaO/SiO₂ inférieur à 5 ; et/ou
   - un rapport massique TiO₂/CaO supérieur à 0,5 et inférieur à 1,3 ; et/ou
   - une teneur en constituants autres que les oxydes de fer, CaO, SiO₂, TiO₂ et Al₂O₃ inférieure à 2% ; et/ou
   - une teneur en oxyde de manganèse, exprimée sous la forme MnO, supérieure à 0,2% et inférieure à 2% ;
- le matériau présente
   - une teneur en oxyde de fer, exprimée sous la forme Fe₂O₃ supérieure à 92% ; et
   - une teneur en CaO supérieure à 0,3% et inférieure à 2% ; et
   - une teneur en SiO₂ supérieure à 0,4% et inférieure à 3% ; et
   - une teneur en TiO₂ supérieure à 0,3% et inférieure à 2,5% ; et
   - une teneur en Al₂O₃ inférieure à 1,5% ; et
   - une teneur totale en TiO₂ + Al₂O₃ supérieure à 0,3% et inférieure à 2% ; et
   - un rapport massique CaO/SiO₂ inférieur à 5 ; et
   - un rapport massique TiO₂/CaO supérieur à 0,5 et inférieur à 1,3 ; et
   - une teneur en constituants autres que les oxydes de fer, CaO, SiO₂, TiO₂ et Al₂O₃ inférieure à 2% ; et
   - une teneur en oxyde de manganèse, exprimée sous la forme MnO, supérieure à 0,2% et inférieure à 2% ;
- le matériau présente
   - une teneur en oxyde de fer, exprimée sous la forme Fe₂O₃ supérieure à 95% ; et/ou
   - une teneur en CaO inférieure à 1% ; et/ou
   - une teneur en SiO₂ supérieure à 0,7% et inférieure à 2% ; et/ou
   - une teneur en TiO₂ supérieure à 0,5% et inférieure à 2% ; et/ou
   - une teneur en Al₂O₃ inférieure à 1% ; et/ou
   - une teneur totale en TiO₂ + Al₂O₃ supérieure à 0,4% ; et/ou
   - un rapport massique CaO/SiO₂ inférieur à 3 ; et/ou
   - un rapport massique TiO₂/CaO supérieur à 0,7 et inférieur à 1,2 ; et/ou
   - une teneur en constituants autres que les oxydes de fer, CaO, SiO₂, TiO₂ et Al₂O₃ inférieure à 1% ; et/ou
   - une teneur en oxyde de manganèse, exprimée sous la forme MnO, supérieure à 0,4% et inférieure à 1% ;
- le matériau présente
   - une teneur en oxyde de fer, exprimée sous la forme Fe₂O₃ supérieure à 95% ; et
   - une teneur en CaO inférieure à 1% ; et
   - une teneur en SiO₂ supérieure à 0,7% et inférieure à 2% ; et
   - une teneur en TiO₂ supérieure à 0,5% et inférieure à 2% ; et
   - une teneur en Al₂O₃ inférieure à 1% ; et
   - une teneur totale en TiO₂ + Al₂O₃ supérieure à 0,4% ; et
   - un rapport massique CaO/SiO₂ inférieur à 3 ; et
   - un rapport massique TiO₂/CaO supérieur à 0,7 et inférieur à 1,2 ; et
   - une teneur en constituants autres que les oxydes de fer, CaO, SiO₂, TiO₂ et Al₂O₃ inférieure à 1% ; et
   - une teneur en oxyde de manganèse, exprimée sous la forme MnO, supérieure à 0,4% et inférieure à 1%.

Le matériau selon l'invention peut en particulier se présenter sous la forme d'une particule, dite « particule selon l'invention ».

L'invention concerne également une poudre, dite « poudre selon l'invention », comportant plus de 90%, de préférence plus de 95%, de préférence sensiblement 100% en masse de particules selon l'invention.

Un mélange particulaire selon l'invention comporte, en pourcentages massiques :
(a) plus de 60%, en masse, de particules présentant une taille supérieure ou égale à 50 µm, ou « particules d'agrégats », plus de 90% en masse desdites particules d'agrégats étant des particules en un matériau selon l'invention ;
(b) plus de 15%, en masse, de particules présentant une taille inférieure à 50 µm, ou « particules matricielles » ;
le mélange particulaire comportant plus de 5% en masse de particules d'agrégats présentant une taille supérieure à 1 mm et, de préférence, inférieure à 15 mm.

Un mélange particulaire selon l'invention peut encore présenter une ou plusieurs des caractéristiques optionnelles suivantes :
- plus de 60%, de préférence plus de 90% des particules du mélange particulaire sont en un matériau selon l'invention, en pourcentage massique ;
- dans un mode de réalisation, la fraction matricielle, constituée des particules matricielles, présente l'analyse chimique suivante, en pourcentages massiques sur la base des oxydes de la fraction matricielle :
   - oxyde(s) de fer, exprimé sous la forme Fe₂O₃ ≥ 85%,
   - CaO ≤ 6%, et
   - SiO₂ : 0,1% - 6%, et
   - TiO₂ : 0,1% - 6%, et
   - Al₂O₃ ≤ 2%, et
   - autres oxydes : ≤ 5%,
      le rapport massique CaO/SiO₂ étant inférieur à 1, et
      le rapport massique CaO/TiO₂ étant inférieur à 1 ;
- dans un mode de réalisation, la fraction matricielle, constituée des particules matricielles, présente l'analyse chimique suivante, en pourcentages massiques sur la base des oxydes de la fraction matricielle :
   - oxyde(s) de fer, exprimé sous la forme Fe₂O₃ ≥ 85%,
   - CaO : 0,1% - 6%, et
   - SiO₂ : 0,1% - 6%, et
   - 0,05% < TiO₂, et
   - 0 ≤ Al₂O₃, et
   - TiO₂ + Al₂O₃ ≤ 3%, et
   - autres oxydes ≤ 5%,
   le rapport massique CaO/SiO₂ étant compris entre 0,2 et 7, et
   le rapport massique TiO₂/CaO étant compris entre 0,2 et 1.

L'invention concerne aussi un procédé de fabrication d'un mélange particulaire selon l'invention par mélange d'une poudre selon l'invention avec d'autres matières premières particulaires.

L'invention concerne également un procédé de fabrication d'un produit réfractaire fritté, dit « produit fritté selon l'invention », ledit procédé comportant les étapes successives suivantes :
A) préparation d'une charge de départ par mélange d'un mélange particulaire selon l'invention et d'eau ;
B) mise en forme de ladite charge de départ de manière à former une préforme ;
C) frittage de ladite préforme de manière à obtenir ledit produit fritté.

L'invention concerne également un produit fritté obtenu par frittage d'un mélange particulaire selon l'invention, en particulier suivant les étapes A) à C) ci-dessus.

L'invention concerne aussi une unité de stockage thermique comportant des éléments de stockage d'énergie calorifique, de préférence en vrac et/ou sous la forme de pièces empilées de manière ordonnée, lesdits éléments de stockage d'énergie calorifique étant en un produit réfractaire fritté selon l'invention.

De préférence, l'unité de stockage thermique selon l'invention comporte plus de 50%, de préférence plus de 90% en nombre d'éléments de stockage d'énergie calorifique en un produit fritté selon l'invention, sur la base du nombre d'éléments de stockage d'énergie calorifique. De préférence, sensiblement tous les éléments de stockage d'énergie calorifique de l'unité de stockage thermique selon l'invention sont en un produit fritté selon l'invention.

De préférence, les d'éléments de stockage d'énergie calorifique de l'unité de stockage thermique sont conformés et agencés de manière que ladite unité de stockage thermique présente une fraction volumique de vide inférieure ou égale à 60%, de préférence inférieure ou égale à 50%, de préférence inférieure ou égale à 40%, de préférence inférieure ou égale à 30%, de préférence inférieure ou égale à 25%, voire inférieure ou égale à 20% et/ou supérieure ou égale à 10%, de préférence supérieure ou égale à 15%.

L'invention concerne encore un ensemble comportant :
- une unité de stockage thermique selon l'invention, et
- un dispositif de circulation d'un fluide caloporteur à travers ladite unité de stockage thermique.

De préférence, le dispositif de circulation assure
- pendant une phase de charge, la circulation d'un fluide caloporteur de charge à travers ladite unité de stockage thermique, et
- pendant une phase de décharge, une circulation d'un fluide caloporteur de décharge à travers ladite unité de stockage thermique,
au moins un desdits fluides caloporteurs de charge et de décharge, de préférence les deux fluides caloporteurs de charge et de décharge, circulant de préférence à travers l'unité de stockage thermique depuis un conduit inférieur vers au moins un conduit supérieur.

L'invention concerne aussi une installation thermique comportant :
- une unité produisant de l'énergie calorifique, par exemple un four, une tour solaire, ou un compresseur, et
- un ensemble selon l'invention, le dispositif de circulation dudit ensemble assurant, pendant une phase de charge, la circulation du fluide caloporteur de charge depuis l'unité produisant de l'énergie calorifique jusqu'à l'unité de stockage thermique, puis à travers ladite unité de stockage thermique.

De préférence, une installation thermique selon l'invention comporte un consommateur d'énergie calorifique, ledit dispositif de circulation assurant, pendant la phase de décharge, une circulation du fluide caloporteur de décharge à travers ladite unité de stockage thermique, puis depuis ladite unité de stockage thermique jusqu'au consommateur d'énergie calorifique.

### Brève description des figures

D'autres objets, aspects, propriétés et avantages de la présente invention apparaîtront encore à la lumière de la description et des exemples qui suivent et à l'examen du dessin annexé dans lequel :
- la figure 1 représente schématiquement une installation thermique selon l'invention ;
- la figure 2 représente schématiquement une unité de stockage thermique selon l'invention.

### Définitions

- Le terme « installation thermique » est à comprendre au sens large, comme signifiant toute installation comportant une unité produisant de l'énergie calorifique.
- Par « unité produisant de l'énergie calorifique », on envisage non seulement les unités qui sont spécifiquement prévues pour générer de l'énergie calorifique, comme une tour solaire, mais aussi les unités qui, de par leur fonctionnement génèrent de l'énergie calorifique, par exemple un compresseur.
- Le terme « consommateur d'énergie calorifique » désigne un élément capable de recevoir de l'énergie calorifique. Il peut notamment en résulter une augmentation de la température du consommateur (par exemple dans le cas de chauffage d'un bâtiment) et/ou une transformation en énergie mécanique (par exemple dans une turbine à gaz).
- Une poudre ou un mélange particulaire sont des ensembles secs de particules non liées les unes aux autres. Les pourcentages relatifs à un mélange particulaire ou à une poudre sont donc implicitement sur la base de la matière sèche.
- Par « particule », on entend un objet solide dont la taille est inférieure à 30 mm.
   On distingue en particulier les particules présentant une taille supérieure ou égale à 50 µm, appelées « particules grossières » ou « particules d'agrégat », et celles présentant une taille inférieure à 50 µm, appelées « particules fines » ou « particules matricielles ». L'ensemble des particules grossières constitue la « fraction grossière » ou « agrégat ». L'ensemble des particules matricielles constitue la « fraction fine » ou « fraction matricielle ».
- On appelle « frittage » la consolidation par traitement thermique à plus de 1100°C d'une préforme, avec éventuellement une fusion, partielle ou totale, de certains de ses constituants (mais pas de tous ses constituants, de sorte que la préforme n'est pas transformée en une masse liquide).
   L'invention concerne deux types de matières frittées, à savoir le matériau fritté selon l'invention, qui sert notamment à la fabrication de particules frittées selon l'invention, et le produit fritté obtenu par frittage de ces particules. Dans un souci de clarté, des termes différents ont été utilisés pour ces deux matières :
   - Pour le matériau fritté selon l'invention, la préforme est le résultat d'une mise en forme d'un mélange de poudres, et le frittage conduit à une consolidation liant les « grains » entre eux.
   - Pour le produit fritté selon l'invention, la préforme est le résultat d'une mise en forme d'un « mélange particulaire » selon l'invention et le frittage conduit à la transformation de la « fraction matricielle » en une phase liante, ou "matrice", qui va lier entre elles les « particules grossières » (sensiblement non affectées par le frittage). On appelle "granulats" les particules grossières liées par la matrice.
- La taille des particules d'une poudre ou d'un mélange particulaire est évaluée classiquement par une caractérisation de distribution granulométrique réalisée avec un granulomètre laser pour la fraction des particules passant à travers un tamis à mailles carrées d'ouverture de 50 µm et, pour le refus audit tamis, par tamisage à l'aide de tamis à mailles carrées. Le granulomètre laser peut être, par exemple, un Partica LA-950 de la société HORIBA. Les particules grossières conservent sensiblement leurs dimensions et leur morphologie lors du frittage et correspondent donc sensiblement aux grains du produit fritté.
- Les percentiles ou « centiles » 10 (A₁₀), 50 (A₅₀), 90 (A₉₀) et 99,5 (A_{99,5}), et plus généralement « n » Aₙ d'une propriété A d'une population, par exemple d'une population de particules, sont les valeurs de cette propriété correspondant aux pourcentages de 10%, 50%, 90%, 99,5% et n%, respectivement, sur la courbe de distribution cumulée relative à cette propriété, les valeurs relatives à cette propriété étant classées par ordre croissant. En particulier, les percentiles Dₙ sont relatifs à des tailles de particules d'une poudre ou d'un mélange particulaire. Les pourcentages sont en masse.
   Par exemple, 10 %, en masse, des particules de la poudre ont une taille inférieure à D₁₀ et 90 % des particules en masse ont une taille supérieure ou égale à D₁₀. Les percentiles relatifs à la taille des particules peuvent être déterminés à l'aide d'une distribution granulométrique réalisée à l'aide d'un granulomètre laser et/ou de tamisages.
   Le percentile 50 est classiquement appelé le percentile « médian ». Par exemple, le percentile D₅₀ est conventionnellement appelé « taille médiane ».
- Par « masse volumique absolue » d'un matériau, on entend classiquement le rapport égal à la masse de matière sèche dudit matériau mesurée après un broyage à une finesse telle qu'il ne demeure sensiblement aucun pore fermé, divisée par le volume de cette masse après broyage. Elle peut être mesurée par pycnométrie à hélium.
- Par « masse volumique apparente » d'un matériau ou d'un produit fritté, on entend classiquement le rapport égal à la masse dudit matériau ou produit fritté divisée par le volume qu'occupe ledit matériau ou ledit produit fritté.
- Par « masse volumique relative » d'un matériau, on entend le rapport égal à la masse volumique apparente dudit matériau divisée par la masse volumique absolue dudit matériau, exprimé en pourcentage.
- La « fraction volumique de vide » est le rapport entre le volume de vide et le volume général occupé par l'ensemble des éléments de stockage d'énergie de l'unité de stockage thermique.
   Le volume général occupé par l'ensemble des éléments de stockage d'énergie est le volume de l'enveloppe de cet ensemble. Ainsi, lorsque le volume intérieur de l'unité de stockage thermique est rempli d'éléments de stockage d'énergie, le volume général occupé par l'ensemble des éléments de stockage d'énergie est égal au volume intérieur de l'unité de stockage thermique.
   Le volume de vide est classiquement défini comme la différence entre le volume général occupé par l'ensemble des éléments de l'unité de stockage thermique et la somme des volumes de chacun desdits éléments, le volume d'un élément étant déterminé en ignorant sa porosité.
- Sauf indication contraire, lorsqu'un pourcentage est exprimé « sur la base des oxydes », comme cela est classique dans les matériaux réfractaires, la teneur massique d'un constituant est classiquement exprimée sous la forme de l'oxyde le plus stable.
- Par « contenant un », « comprenant un » ou « comportant un », on entend une inclusion non exclusive, sauf indication contraire.
- Les différentes caractéristiques d'un matériau selon l'invention peuvent être déterminées par les méthodes de caractérisation utilisées pour les exemples ci-dessous.

### Description détaillée

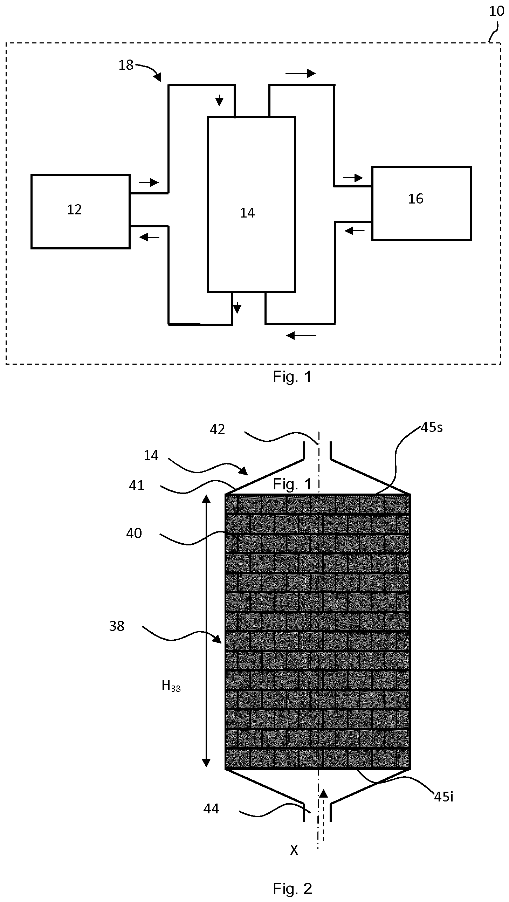

L'installation thermique 10 selon l'invention représentée sur la figure 1 comprend une unité produisant de l'énergie calorifique 12, une unité de stockage thermique 14, un consommateur d'énergie calorifique 16 et un dispositif de circulation 18.

L'unité produisant de l'énergie calorifique 12 peut être par exemple être un four ou une tour solaire, ou un compresseur. De préférence, l'unité produisant de l'énergie calorifique produit plus de 50 kWh, ou plus de 100 kWh, voire plus de 300 kWh, voire plus de 1 MWh, voire plus de 5 MWh d'énergie calorifique.

Le consommateur d'énergie calorifique 16 peut être par exemple un bâtiment ou un ensemble de bâtiments, un réservoir, un bassin, une turbine couplée à un alternateur afin de générer de l'électricité, une installation industrielle consommant de la vapeur d'eau, par exemple l'industrie de la fabrication de la pâte à papier ou une chaudière à vapeur.

Le dispositif de circulation 18 comporte classiquement un ensemble de canalisations, de vannes et de pompes/ventilateurs/extracteurs commandés de manière à pouvoir sélectivement mettre en communication l'unité de stockage thermique
- avec l'unité produisant de l'énergie calorifique 12 de manière qu'il puisse recevoir un fluide caloporteur de charge sortant de ladite unité, pendant les phases de charge, et
- avec le consommateur d'énergie calorifique 16 de manière que le fluide caloporteur de décharge réchauffé sortant de l'unité de stockage thermique puisse réchauffer ledit consommateur, ou plus généralement transférer de l'énergie calorifique audit consommateur, pendant les phases de décharge,
   et de manière à pouvoir forcer la circulation du fluide caloporteur de charge et/ou du fluide caloporteur de décharge à travers l'unité de stockage thermique 14.

Les fluides caloporteurs de charge et de décharge peuvent être de même nature ou non.

Le fluide caloporteur mis en oeuvre pour la charge et/ou la décharge de l'unité de stockage thermique peut être un gaz, par exemple de l'air, de la vapeur d'eau, ou un gaz caloporteur, ou être un liquide, par exemple de l'eau, une huile thermique, des sels fondus ou des métaux ou alliages fondus.

La figure 2 représente un exemple d'unité de stockage thermique 14. Cette unité de stockage thermique comporte un empilement 38 d'axe longitudinal X, de préférence sensiblement vertical.

L'empilement 38, constitué de briques 40, est disposé dans une enceinte 41, par exemple en métal ou en matériau céramique, présentant un orifice supérieur 42 et un orifice inférieur 44 par lesquels, de préférence, les fluides caloporteurs de charge et de décharge, respectivement, entrent dans l'unité de stockage thermique. De préférence, les fluides caloporteurs de charge et de décharge sortent de l'unité de stockage thermique 14 par les orifices inférieur 42 et supérieur 44, respectivement.

La hauteur H₃₈ de l'empilement 38, entre sa face supérieure 45s et sa face inférieure 45i, est de préférence supérieure à 1 m, de préférence supérieur à 5 m, de préférence supérieure à 15 m, de préférence supérieure 25 m, voire supérieure à 35 m, voire supérieure 50 m.

La masse de l'empilement 38 est de préférence supérieure à 1 T, de préférence supérieure à 10 T, voire supérieure à 100 T, voire supérieure à 500 T, voire supérieure à 700 T, voire supérieure à 2000 T, voire supérieure à 4000 T, voire supérieure à 5000 T, voire supérieure à 7000 T.

### Matériau

Un matériau selon l'invention présente de préférence :
- une teneur en oxyde de fer, exprimée sous la forme Fe₂O₃ supérieure à 88%, de préférence supérieure à 90%, de préférence supérieure à 92%, de préférence supérieure à 94%, de préférence supérieure à 95%, de préférence supérieure à 96%, de préférence supérieure à 97%, ce qui avantageusement améliore la masse volumique apparente du matériau ; et/ou
- une teneur en CaO supérieure à 0,2%, voire supérieure à 0,3%, et/ou inférieure à 4%, de préférence inférieure à 3%, de préférence inférieure à 2%, de préférence inférieure à 1% ; et/ou
- une teneur en SiO₂ supérieure à 0,2%, de préférence supérieure à 0,4%, de préférence supérieure à 0,5%, de préférence supérieure à 0,7%, et/ou inférieure à 6%, de préférence inférieure à 4%, de préférence inférieure à 3%, de préférence inférieure à 2%, de préférence inférieure à 1,5% ; et/ou
- une teneur en TiO₂ supérieure à 0,1%, de préférence supérieure à 0,2%, de préférence supérieure à 0,3%, de préférence supérieure à 0,5%, et/ou inférieure à 3%, de préférence inférieure à 2,5%, de préférence inférieure à 2% ; et/ou
- une teneur en Al₂O₃ supérieure à 0,1%, et/ou inférieure à 2,5%, de préférence inférieure à 2%, de préférence inférieure à 1,5%, de préférence inférieure à 1% ; et/ou
- une teneur totale en TiO₂ + Al₂O₃ supérieure à 0,2%, de préférence supérieure à 0,3%, de préférence supérieure à 0,4%, et/ou inférieure à 2,5%, de préférence inférieure à 2% ; et/ou
- un rapport massique CaO/SiO₂ supérieur à 0,4 et/ou inférieur à 6,5, de préférence inférieur à 6, de préférence inférieur à 5,5, de préférence inférieur à 5, de préférence inférieur à 4,5, de préférence inférieur à 4, de préférence inférieur à 3,5, de préférence inférieur à 3, de préférence inférieur à 2,5, de préférence inférieur à 2, de préférence inférieur à 1,5, de préférence inférieur à 1,3, voire inférieur à 1 ; et/ou
- un rapport massique TiO₂/CaO supérieur à 0,3, de préférence supérieur à 0,4, de préférence supérieur à 0,5, de préférence supérieur à 0,6, de préférence supérieur à 0,7, et/ou inférieur à 1,4, de préférence inférieur à 1,3, de préférence inférieur à 1,2 ; et/ou
- une teneur en constituants autres que les oxydes de fer, CaO, SiO₂, TiO₂ et Al₂O₃ inférieure à 4%, de préférence inférieure à 3%, de préférence inférieure à 2%, de préférence inférieure à 1,5%, voire inférieure à 1%.

Dans un mode de réalisation, la teneur en oxyde de manganèse, exprimée sous la forme MnO, est supérieure à 0,1%, voire supérieure à 0,2%, voire supérieure à 0,4%, et/ou inférieure à 3%, de préférence inférieure à 2,5%, de préférence inférieure à 2%, de préférence inférieure à 1,5%, voire inférieure à 1%.

La masse volumique relative du matériau est de préférence supérieure à 90%, de préférence supérieure à 91%, de préférence supérieure à 92%, de préférence supérieure à 93%, voire supérieure à 94%. L'homme du métier sait modifier la masse volumique relative d'un matériau fritté, notamment en adaptant la granulométrie des poudres utilisées et les paramètres du procédé de fabrication, en particulier la température de frittage et/ou la quantité des liants et/ou la nature des liants, et/ou
- la pression si la mise en forme fait intervenir un pressage ;
- la pression, et les dimensions et la forme de la filière si la mise en forme fait intervenir une extrusion.

La masse volumique apparente du matériau est de préférence supérieure à 4,60 g/cm³, de préférence supérieure à 4,65 g/cm³, de préférence supérieure à 4,70 g/cm³, de préférence supérieure à 4,80 g/cm³, de préférence supérieure à 4,90 g/cm³.

La taille moyenne des grains du matériau est de préférence inférieure à 100 µm, de préférence inférieure à 90 µm, de préférence inférieure à 80 µm, de préférence inférieure à 60 µm, de préférence inférieure à 50 µm, de préférence inférieure à 40 µm, de préférence inférieure à 30 µm et/ou supérieure à 0,2 µm, de préférence supérieure à 0,5 µm.

La quantité de phase hématite dans le matériau, en pourcentage massique sur la base de la masse des phases cristallisées, mesurée par diffraction aux rayons X, est de préférence supérieure à 50%, de préférence supérieure à 70%, de préférence supérieure à 80%, de préférence supérieure à 85%.

### Poudre

Le matériau selon l'invention peut être mis sous la forme d'une particule ou d'une poudre de particules.

La taille des particules d'une poudre selon l'invention peut notamment être supérieure à 0,01 µm, voire supérieure à 0,1 µm, voire supérieure à 0,5 µm, voire supérieure à 1 µm, voire supérieure à 10 µm, voire supérieure à 50 µm, voire supérieure à 100 µm, voire supérieure à 0,2 mm, voire supérieure à 0,25 mm, et/ou inférieure à 20 mm, de préférence inférieure à 15 mm, de préférence inférieure à 10 mm, voire inférieure à 8 mm, voire inférieure à 5 mm, voire inférieure à 4 mm.

Dans un mode de réalisation, une poudre selon l'invention présente une taille minimale (D_{0,5}) supérieure à 50 µm.

### Mélange particulaire

Un mélange particulaire selon l'invention comporte de préférence :
(a) plus de 60%, plus de 65%, voire plus de 70% de particules d'agrégats, en pourcentage massique, plus de 90%, de préférence plus de 95%, de préférence plus de 98%, de préférence sensiblement 100% desdites particules d'agrégats, en pourcentage massique, étant des particules selon l'invention ;
(b) plus de 15%, voire plus de 20% de particules matricielles, en pourcentage massique ;
le mélange particulaire comportant plus de 5% en masse de particules d'agrégats présentant une taille supérieure à 1 mm et, de préférence, inférieure à 15 mm.

La taille maximale du mélange particulaire est de préférence inférieure à 10 mm, de préférence inférieure à 5 mm.

Dans un mode de réalisation, plus de 60%, de préférence plus de 70%, de préférence plus de 90%, de préférence plus de 95%, de préférence plus de 99% des particules du mélange particulaire, en pourcentage massique, sont en un matériau selon l'invention.

En particulier lorsqu'il est destiné à être utilisé comme matière première pour la fabrication d'une pièce frittée, un mélange particulaire selon l'invention peut comporter, en complément à 100% des oxydes de fer, de CaO, de SiO₂, de TiO₂ et de Al₂O₃, plus de 0,1% et/ou moins de 6% d'un additif de mise en forme, en pourcentage massique.

### Fraction matricielle du mélange particulaire

La fraction matricielle peut être constituée, de préférence pour plus de 90%, de préférence plus de 95%, de préférence sensiblement 100%, en pourcentage massique, de particules d'alumine et/ou de particules de zircone et/ou de particules de magnésie et/ou de particules de zircon et/ou de particules d'oxyde(s) de fer et/ou de particules d'oxyde de titane et/ou de particules de silice et/ou de particules de chaux et/ou de particules comportant plusieurs desdits oxydes (alumine, zircone, magnésie, zircon, oxyde(s) de fer, oxyde de titane, silice, chaux).

La fraction matricielle peut-être constituée pour plus de 90%, de préférence plus de 95%, voire sensiblement 100% de particules d'alumine et/ou d'oxyde de fer et/ou de particules d'oxyde de titane et/ou de particules de silice et/ou de particules de chaux et/ou de particules comportant plusieurs desdits oxydes.

Dans un mode de réalisation, plus de 50%, de préférence plus de 70%, de préférence plus de 90%, de préférence plus de 95%, de préférence plus de 99% des particules matricielles sont en un matériau selon l'invention, de préférence fritté.

Dans un mode de réalisation, la fraction matricielle présente l'analyse chimique suivante, en pourcentages massiques sur la base des oxydes de la fraction matricielle :
- oxyde(s) de fer, exprimé sous la forme Fe₂O₃ ≥ 85%,
- CaO ≤ 6%, et
- SiO₂ : 0,1% - 6%, et
- TiO₂ : 0,1% - 6%, et
- Al₂O₃ ≤ 2%, et
- autres oxydes : ≤ 5%,
le rapport massique CaO/SiO₂ étant inférieur à 1, et
le rapport massique CaO/TiO₂ étant inférieur à 1.

De préférence, la fraction matricielle de ce mode de réalisation présente une ou plusieurs des caractéristiques optionnelles suivantes :
- une teneur en oxyde de fer, exprimée sous la forme Fe₂O₃ supérieure à 88%, de préférence supérieure à 90%, de préférence supérieure à 92%, de préférence supérieure à 94%, de préférence supérieure à 95% ; et/ou
- une teneur en CaO supérieure à 0,2%, voire supérieure à 0,3%, et/ou inférieure à 4%, de préférence inférieure à 3%, de préférence inférieure à 2%, de préférence inférieure à 1% ; et/ou
- une teneur en SiO₂ supérieure à 0,2%, de préférence supérieure à 0,4%, de préférence supérieure à 0,5%, de préférence supérieure à 0,7%, et/ou inférieure à 5%, de préférence inférieure à 4%, de préférence inférieure à 3%, de préférence inférieure à 2%, de préférence inférieure à 1,5% ; et/ou
- une teneur en TiO₂ supérieure à 0,1%, de préférence supérieure à 0,2%, et/ou inférieure à 2%, de préférence inférieure à 1,5%, de préférence inférieure à 1%, de préférence inférieure à 0,5% ; et/ou
- dans un mode de réalisation, une teneur en Al₂O₃ supérieure à 0,1%, et/ou inférieure à 1,8%, de préférence inférieure à 1,5%, de préférence inférieure à 1%, de préférence inférieure à 0,5% ; et/ou
- un rapport massique CaO/SiO₂ supérieur à 0,4 et/ou inférieur à 0,9, de préférence inférieur à 0,8 ; et/ou
- un rapport massique CaO/TiO₂ supérieur à 0,5 ; et/ou
- une teneur en autres oxydes inférieure à 4%, de préférence inférieure à 3%, de préférence inférieure à 2%, de préférence inférieure à 1,5%, voire inférieure à 1%.

Dans un mode de réalisation, la fraction matricielle présente l'analyse chimique suivante, en pourcentages massiques sur la base des oxydes de la fraction matricielle :
- oxyde(s) de fer, exprimé sous la forme Fe₂O₃ ≥ 85%,
- CaO : 0,1% - 6%, et
- SiO₂ : 0,1% - 6%, et
- 0,05% < TiO₂, et
- 0 ≤ Al₂O₃, et
- TiO₂ + Al₂O₃ ≤ 3%, et
- autres oxydes ≤ 5%,
le rapport massique CaO/SiO₂ étant compris entre 0,2 et 7, et
le rapport massique TiO₂/CaO étant compris entre 0,2 et 1.

De préférence, la fraction matricielle de ce mode de réalisation présente une ou plusieurs des caractéristiques optionnelles suivantes :
- une teneur en oxyde de fer, exprimée sous la forme Fe₂O₃, supérieure à 88%, de préférence supérieure à 90%, de préférence supérieure à 92%, de préférence supérieure à 94%, de préférence supérieure à 95%, de préférence supérieure à 97% ; et/ou
- une teneur en CaO supérieure à 0,2%, voire supérieure à 0,3%, et/ou inférieure à 4%, de préférence inférieure à 3%, de préférence inférieure à 2%, de préférence inférieure à 1% ; et/ou
- une teneur en SiO₂ supérieure à 0,2%, de préférence supérieure à 0,4%, de préférence supérieure à 0,5%, de préférence supérieure à 0,7%, et/ou inférieure à 5%, de préférence inférieure à 4%, de préférence inférieure à 3%, de préférence inférieure à 2%, de préférence inférieure à 1,5% ; et/ou
- une teneur en TiO₂ supérieure à 0,3%, de préférence supérieure à 0,5%, et/ou inférieure à 3%, de préférence inférieure à 2,5%, de préférence inférieure à 2% ; et/ou
- une teneur totale en TiO₂ + Al₂O₃ supérieure à 0,2%, de préférence supérieure à 0,3%, de préférence supérieure à 0,4% et/ou inférieure à 2,5%, de préférence inférieure à 2% ; et/ou
- dans un mode de réalisation, une teneur en Al₂O₃ supérieure à 0,1%, et/ou inférieure à 2,5%, de préférence inférieure à 2%, de préférence inférieure à 1,5%, de préférence inférieure à 1% ; et/ou
- un rapport massique CaO/SiO₂ supérieur à 0,4 et/ou inférieur à 6,5, de préférence inférieur à 6, de préférence inférieur à 5,5, de préférence inférieur à 5, de préférence inférieur à 4,5, de préférence inférieur à 4, de préférence inférieur à 3,5, de préférence inférieur à 3, de préférence inférieur à 2,5, de préférence inférieur à 2, de préférence inférieur à 1,5, de préférence inférieur à 1,3, voire inférieur à 1 ; et/ou
- un rapport massique TiO₂/CaO supérieur à 0,3, de préférence supérieur à 0,4, de préférence supérieur à 0,5 ; et/ou
- une teneur en « autres oxydes » inférieure à 4%, de préférence inférieure à 3%, de préférence inférieure à 2%, de préférence inférieure à 1,5%, voire inférieure à 1%.

### Procédé de fabrication d'un produit fritté selon l'invention

Un mélange particulaire selon l'invention peut être avantageusement utilisé pour fabriquer un produit fritté présentant des granulats liés par une matrice liante. A cet effet, un procédé comportant les étapes A) à C) décrites ci-dessus peut être mis en œuvre.

**A l'étape A),** une charge de départ comportant un mélange particulaire selon l'invention est préparée en fonction de la composition et de la distribution granulométrique souhaitées.

Les modèles de compaction d'Andréasen ou de Fuller-Bolomey peuvent être utilisés pour adapter la distribution granulométrique du mélange particulaire à la masse volumique apparente souhaitée pour le produit fritté selon l'invention. De tels modèles de compaction sont notamment décrits dans l'ouvrage intitulé « Traité de céramiques et matériaux minéraux », C.A. Jouenne, Editions Septima. Paris (1984), pages 403 à 405.

De préférence, la charge de départ contient un additif de mise en forme, de préférence introduit sous une forme sèche, et de préférence en une quantité supérieure à 0,1% et inférieure à 7%, de préférence inférieure à 5%, de préférence inférieure à 3%, voire inférieure à 2%, en pourcentage massique sur la base de la masse du mélange particulaire hors additif de mise en forme.

L'additif de mise en forme peut en particulier être choisi dans le groupe constitué par :
- les argiles ;
- les plastifiants, comme le polyéthylène glycol (ou « PEG ») ou l'alcool polyvinylique (ou « APV »);
- les ciments, de préférence à haute teneur en alumine ;
- les alumines hydratables, comme la boehmite ;
- les phosphates, de préférence les phosphates d'alumines,
- les silicates de soude et/ou de potassium ;
- les géopolymères ;
- les liants dont les liants temporaires organiques tels que les résines organiques, les lignosulfonates, la carboxyméthylcellulose, la dextrine et les alginates ;
- les défloculants, tels que des polyphosphates de métaux alcalins, des polyacrylates de métaux alcalins, des polycarboxylates ;
- les mélanges de ces produits.

De préférence, l'additif de mise en forme est choisi dans le groupe constitué par les ciments, les défloculants, les argiles, les lignosulfonates, l'APV et leurs mélanges.

Lorsque l'additif de mise en forme est apporté sous forme de particules, ces particules font bien entendu partie du mélange particulaire.

Le mélange particulaire peut être livré prêt-à-l'emploi. De préférence, il est sec et contient l'additif de mise en forme. Il suffit alors de le mélanger à un solvant, de préférence de l'eau, pour préparer la charge de départ.

La quantité de solvant est fonction de la technologie utilisée à l'étape B).

Dans le cas d'une mise en forme par pressage à froid, un ajout d'une quantité d'eau comprise entre 1,5% et 4%, en pourcentage massique sur la base du mélange particulaire, est préféré. Dans le cas d'une mise en forme faisant intervenir une liaison hydraulique, par exemple un coulage, un ajout d'une quantité d'eau comprise entre 3% et 7%, en pourcentage massique sur la base du mélange particulaire, est préféré.

**A l'étape B),** la charge de départ peut être versée dans un moule, afin d'être mise en forme et transformée en préforme suivant des techniques conventionnelles, par exemple par pressage.

Après l'étape B) et avant l'étape C), la préforme peut subir une étape de séchage, afin d'éliminer une partie de l'eau ayant été utilisée pour la mise en forme. Une telle étape est parfaitement connue de l'homme du métier.

**A l'étape C),** les conditions de frittage, et en particulier la température de frittage, dépendent de la composition de la préforme. Habituellement, une température de frittage comprise entre 1200°C et 1500°C, de préférence comprise entre 1200°C et 1350°C, est bien adaptée.

A l'issue de l'étape C), on obtient un produit fritté selon l'invention.

Les propriétés de ce produit fritté le rendent particulièrement bien adapté à une utilisation dans une unité de stockage thermique.

### Produit fritté selon l'invention

Un produit fritté selon l'invention présente de préférence la forme d'un bloc dont toutes les dimensions sont supérieures à 1 mm, supérieures à 5 mm, supérieures à 5 cm et dont toutes les dimensions sont de préférence inférieures à 150 cm, voire inférieures à 100 cm, voire inférieures à 60 cm. Il présente de préférence une masse supérieure à 1 kg, supérieure à 5 kg, voire supérieure à 10 kg.

De préférence encore, le produit fritté selon l'invention présente :
- une masse volumique apparente supérieure à 4 g/cm³, de préférence supérieure à 4,1 g/cm³, de préférence supérieure à 4,2 g/cm³, voire supérieure à 4,3 g/cm³, voire supérieure à 4,4 g/cm³ ; et/ou
- l'analyse chimique suivante, en pourcentages massiques sur la base des oxydes et pour un total égal à 100% :
   - Fe₂O₃ > 85%, de préférence > 88%, de préférence > 90%, de préférence > 92%, de préférence > 94%,
   - CaO > 0,1%, de préférence > 0,2%, de préférence > 0,3% et de préférence < 4%, de préférence < 3,5%, de préférence < 3%, de préférence < 2,5%, de préférence < 2%, de préférence < 1,5%, de préférence < 1%,
   - SiO₂ > 0,1%, de préférence > 0,5%, de préférence > 0,8%, de préférence > 1% et de préférence < 4%, de préférence < 3,5%, de préférence < 3%, de préférence < 2,5%, de préférence < 2%,
   - TiO₂ > 0,1%, de préférence > 0,2%, voire > 0,5%, voire > 0,8% et de préférence < 4%, de préférence < 3,5%, de préférence < 3%, de préférence < 2,5%, de préférence < 2%, de préférence < 1,5%,
   - 0 ≤ Al₂O₃ ≤ 3%, de préférence > 0,1%, de préférence > 0,2% et de préférence < 2,5%, de préférence < 2%, de préférence < 1,5%, de préférence < 1%,
   - autres oxydes ≤ 5%, de préférence < 4%, de préférence < 3,5%, de préférence < 3%, de préférence < 2,5%, de préférence < 2%, de préférence < 1,5%, de préférence < 1% ; et/ou
- une capacité thermique massique à 800°C, supérieure à 850 J/kg.K, de préférence supérieure à 900 J/kg.K, de préférence supérieure à 950 J/kg.K, mesurée par calorimétrie différentielle à balayage ; et/ou
- une quantité de phase hématite, en pourcentage massique sur la base de la masse des phases cristallisées, mesurée par diffraction aux rayons X, supérieure à 50%, de préférence supérieure à 70%, de préférence supérieure à 80%, de préférence supérieure à 85%.

### Exemples

Les exemples non limitatifs suivants sont donnés dans le but d'illustrer l'invention.

### Caractérisations

La masse volumique apparente est mesurée par imbibition, selon le principe de la poussée d'Archimède.

La masse volumique absolue est mesurée après broyage par pycnométrie à hélium.

L'analyse chimique des produits est mesurée par « *Inductively Coupled Plasma* » ou ICP pour les éléments dont la quantité ne dépasse pas 0,5%. Pour déterminer la teneur des autres éléments, une perle du matériau à analyser est fabriquée en fondant le matériau, puis l'analyse chimique est réalisée par fluorescence X.

La taille moyenne des grains des matériaux est mesurée par la méthode de « *Mean Linear Intercept ».* Une méthode de ce type est décrite dans la norme ASTM E1382. Suivant cette norme, on trace des lignes d'analyse sur des images du matériau, puis, le long de chaque ligne d'analyse, on mesure les longueurs, dites « *intercepts* », entre deux joints de grains consécutifs coupant ladite ligne d'analyse.

On détermine ensuite la longueur moyenne « I' » des intercepts « I».

Pour les matériaux des exemples, les intercepts ont été mesurés sur des images, obtenues par microscopie électronique à balayage, d'échantillons de matériaux, les sections ayant préalablement été polies jusqu'à obtention d'une qualité miroir. Le grossissement utilisé pour la prise des images est choisi de façon à visualiser environ 40 grains sur une image. 5 images par matériau ont été réalisées.

La taille moyenne « d » des grains d'un matériau est donnée par la relation : d = 1,56.I'. Cette formule est issue de la formule (13) de « Average Grain Size in Polycrystalline Ceramics » M. I. Mendelson, J. Am. Cerm. Soc. Vol. 52, No.8, pp443-446.

### Préparation des exemples

Les matières premières suivantes ont été utilisées :
- une poudre d'hématite Rouges Oxyde de Fer 130, commercialisée par la société COLOREY SAS, qui présente une teneur massique en Fe₂O₃ supérieure à 99%, et une taille médiane égale à 0,7 µm (pour les exemples 1 et 2) ;
- une poudre de calamine broyée présentant l'analyse chimique suivante : oxyde de fer exprimée sous la forme Fe₂O₃=96,2%, SiO₂=1,3%, CaO=0,8%, autres oxydes = 1,7% et une taille médiane égale à 6 µm (pour les exemples 3 à 10). Ladite poudre de calamine broyée ne contenait pas TiO₂ ;
- une poudre de silice 971D commercialisée par la société Elkem (pour les exemples 1, 2 et 10) ;
- une poudre d'anatase TiO₂ commercialisée par la société Altichem, présentant une teneur massique en TiO₂ supérieure à 98,3% et une taille médiane égale à 0,5 µm (pour les exemples 2, et 4 à 10) ;
- une poudre de carbonate de calcium Mikhart commercialisée par la société PROVENCALE S.A., présentant une pureté en CaCO₃ supérieure à 98% et une taille médiane égale à 1,5 µm (pour les exemples 1, 2, 9 et 10).

Pour chacun des exemples, le mélange des matières premières utilisé figure dans le tableau 1 suivant :

**Tableau 1**

| Exemple | Poudre d'hématite | Poudre de calamine broyée | Poudre de silice | Poudre d'anatase TiO₂ | Poudre de CaCO₃ |
|---|---|---|---|---|---|
| 1 | 98,1 | - | 1 | | 0,9 |
| 2 | 97,6 | - | 1 | 0,5 | 0,9 |
| 3 | - | 100 | | | - |
| 4 | - | 99,7 | | 0,3 | - |
| 5 | - | 99,5 | | 0,5 | - |
| 6 | - | 99,2 | | 0,8 | - |
| 7 | - | 99 | | 1 | - |
| 8 | - | 98 | | 2 | - |
| 9 | - | 98 | | 1 | 1 |
| 10 | - | 87,9 | 4,1 | 1 | 7 |

Pour chaque exemple, les poudres d'oxydes ont été mélangées avec 0,5% de PEG400 utilisé comme additif de mise en forme et 0,5% d'eau pour les exemples 1 et 2, et 1% pour les exemples 3 à 10, en pourcentages sur la base du mélange des poudres d'oxydes.

Le mélange humide a alors été pressé isostatiquement à froid à 2000 bar pendant 5 minutes sous la forme de pièces de diamètre égal à 100 mm et de hauteur égale à 200 mm.

Ces pièces ont ensuite été frittées à une température de palier de 1275°C, le temps de maintien en palier étant égal à 5 heures, sous air, la vitesse de montée étant de 80°C/h. Après le palier de température, la température a été diminuée, la vitesse de descente étant de 80°C/h jusqu'à 800°C, la descente en température étant libre ensuite jusqu'à la température ambiante.

Le tableau 2 suivant résume les résultats obtenus.

**Tableau 2**

| | | | | | | | Autres oxydes | | | | | | | |
|---|---|---|---|---|---|---|---|---|---|---|---|---|---|---|
| ex | Fe₂O₃ (%) | CaO (%) | SiO₂ (%) | TiO₂ (%) | Al₂O₃ (%) | Al₂O₃ +TiO₂ (%) | total (%) | dont MnO (%) | CaO/SiO₂ | TiO₂/CaO | Masse volumique relative (%) | % Amélioration de la masse volumique relative | % Amélioration de la masse volumique relative | Taille moyenne de grains (µm) |
| 1 | 98,4 | 0,5 | 1 | 0 | 0 | 0 | 0,1 | 0 | 0,50 | 0,00 | 90,2 | réf | - | 15 |
| 2 | 97 | 0,5 | 1 | 0,5 | 0 | 0,5 | 1 | 0 | 0,50 | 1,00 | 93,4 | 3,4 | - | 30 |
| 3 | 97,1 | 0,6 | 1 | 0 | 0,2 | 0,2 | 1,1 | 0,8 | 0,60 | 0,00 | 92,5 | - | réf | <30 |
| 4 | 96,8 | 0,6 | 1 | 0,3 | 0,2 | 0,5 | 1,1 | 0,8 | 0,60 | 0,50 | 93,5 | - | 1,07 | nd |
| 5 | 96,6 | 0,6 | 1 | 0,5 | 0,2 | 0,7 | 1,1 | 0,8 | 0,60 | 0,83 | 93,2 | - | 0,75 | nd |
| 6 | 96,3 | 0,6 | 1 | 0,8 | 0,2 | 1 | 1,1 | 0,8 | 0,60 | 1,33 | 93,0 | - | 0,54 | nd |
| 7 | 96,1 | 0,6 | 1 | 1 | 0,2 | 1,2 | 1,1 | 0,8 | 0,60 | 1,67 | 89,4 | - | -3,47 | <20 |
| 8 | 95,1 | 0,6 | 1 | 2 | 0,2 | 2,2 | 1,1 | 0,8 | 0,60 | 3,33 | 87,0 | - | -6,32 | <15 |
| 9 | 95,6 | 1,1 | 1 | 1 | 0,2 | 1,2 | 1,1 | 0,8 | 1,10 | 0,91 | 94,8 | - | 2,49 | nd |
| 10 | 88,1 | 4,5 | 5,1 | 1 | 0,3 | 1,3 | 1 | 0,7 | 0,88 | 0,22 | 94,7 | - | 2,38 | nd |

| | | | | | | | | | | | | | | |
|---|---|---|---|---|---|---|---|---|---|---|---|---|---|---|
| nd : non déterminé | | | | | | | | | | | | | | |

### Résultats

L'amélioration de la masse volumique relative est le rapport suivant : 100*(masse volumique relative du produit considéré - masse volumique relative du produit de référence)/ masse volumique relative du produit de référence.

Le produit de référence est le produit de l'exemple 1 pour le produit de l'exemple 2 et le produit de l'exemple 3 pour les produits des exemples 3 à 10.

Les inventeurs considèrent qu'une amélioration significative de la densité relative est obtenue lorsque cette amélioration est supérieure ou égale à 0,5%.

Une comparaison des exemples 1 et 2 montre que, pour un même rapport CaO/SiO₂ égal à 0,50, l'ajout de TiO₂ en une quantité telle que le rapport TiO₂/CaO soit égal à 1 permet une amélioration de la densité relative de 3,4%, la masse volumique relative étant augmentée de 90,2% à 93,4%.

Une comparaison des exemples 3 et 4 à 6 montre que pour un même rapport CaO/SiO₂ égal à 0,60, l'ajout de TiO₂ en des quantités telles que le rapport TiO₂/CaO soit égal à 0,50, 0,83 et 1,33, respectivement, permet une amélioration de la densité relative de 1,07%, 0,75% et 0,54%, respectivement, la masse volumique relative étant augmentée de 92,5% à 93,5%, 93,2% et 93,0%, respectivement.

Une comparaison des exemples 3 et 7 à 8 montre que pour un même rapport CaO/SiO₂ égal à 0,60, l'ajout de TiO₂ en des quantités telles que le rapport TiO₂/CaO soit égal à 1,67 et 3,33, respectivement, dégrade la densité relative de 3,47% et 6,32%, respectivement, la masse volumique relative étant diminuée de 92,5% à 89,4% et 87,0%, respectivement.

Une comparaison des exemples 3 et 9 montre que, pour une teneur en SiO₂ égale à 1%, la combinaison d'une réduction du rapport CaO/SiO₂ de 1,10 à 0,60 et d'un ajout de TiO₂ en une quantité telle que le rapport TiO₂/CaO soit égal à 0,91 permet une amélioration de la densité relative de 2,49%.

Une comparaison des exemples 3 et 10 montre que la combinaison d'une augmentation de la teneur en CaO à 4,5%, d'une augmentation du rapport CaO/SiO₂ à 0,88 et d'un l'ajout de TiO₂ en une quantité telle que le rapport TiO₂/CaO soit égal à 0,22 permet une amélioration de la densité relative de 2,38%.

Le produit de l'exemple 2 a ensuite été broyé et classé granulométriquement dans les trois classes granulométriques suivantes: 1,5 à 3,5 mm, 0,5 à 1,5 mm et inférieure à 0,5 mm.

Les trois poudres ainsi obtenues ont été mélangées avec :
- de la poudre d'hématite décrite ci-dessus ou avec une poudre de calamine calcinée, et
- de la poudre d'anatase décrite ci-dessus.

La poudre de calamine calcinée a été obtenue par calcination de la poudre de calamine décrite ci-dessus, par un traitement thermique sous air comportant un maintien de 4 heures à une température égale à 900°C, ladite température étant la température maximale atteinte lors de ce traitement thermique.

Le tableau 3 suivant résume les mélanges particulaires selon l'invention réalisés :

**Tableau 3**

| Mélange particulaire | Poudre de l'exemple 2 1,5-3,5 mm | Poudre de l'exemple 2 0,5-1,5 mm | Poudre de l'exemple 2 <0,5 mm | Poudre d'hématite | Poudre de calamine | Poudre d'anatase |
|---|---|---|---|---|---|---|
| M1 | 28 | 22 | 30 | 20 | - | - |
| M2 | 24 | 32 | 24 | - | 19,5 | 0,5 |

Les mélanges particulaires ont été mélangés à 2,4% d'eau, 1% de lignosulfonate de calcium et 1% d'argile RR40BR commercialisée par la société Imerys. Les mélanges obtenus ont ensuite été pressés sous la forme de briques de dimensions 230 mm x 114 mm x 64 mm, à l'aide d'une presse uniaxiale à une pression égale à 0,7 tonnes/cm².

Les briques obtenues ont ensuite été séchées à 110°C pendant 24 heures, puis frittées dans un cycle à une température de palier de 1225°C, le temps de maintien en palier étant égal à 8 heures, sous air, la vitesse de montée en température étant de 50°C/h. Après le palier de température, la température a été diminuée, la vitesse de descente étant de 50°C/h jusqu'à 800°C, la descente en température étant libre ensuite jusqu'à la température ambiante.

Le tableau 4 suivant présente les résultats obtenus :

**Tableau 4**

| Mélange particulaire mis en forme et fritté | Masse volumique apparente (g/cm³) | % Fe₂O₃ | % CaO | % TiO₂ | % SiO₂ | % autres |
|---|---|---|---|---|---|---|
| M1 | 4,14 | 95,7 | 0,60 | 0,25 | 1,45 | 2,00 |
| M2 | 4,28 | 95,0 | 0,65 | 0,90 | 1,45 | 2,00 |

Ces produits frittés, particulièrement denses et présentant une capacité thermique massique élevée, sont donc parfaitement adaptés pour être utilisés comme élément de stockage d'énergie calorifique dans une unité de stockage thermique, notamment sous la forme de briques telles que décrites dans la demande FR3026473 publiée le 01/04/2016.

Comme cela apparaît clairement à présent, l'invention fournit un matériau réfractaire parfaitement adapté pour la fabrication d'un élément de stockage d'énergie.
Bien entendu, l'invention n'est pas limitée aux modes de réalisation décrits, fournis à titre illustratif et non limitatif.

## Revendications

1. Matériau fritté présentant la composition chimique suivante, en pourcentages massiques :
- oxyde(s) de fer, exprimé sous la forme Fe₂O₃ ≥ 85%
- CaO : 0,1% - 6%, et
- SiO₂ : 0,1% - 6%, et
- 0,05 % ≤ TiO₂, et
- 0 ≤ Al₂O₃ et
- TiO₂ + Al₂O₃ ≤ 3%, et
- constituants autres que les oxydes de fer, CaO, SiO₂, TiO₂ et Al₂O₃ : ≤ 5%,
le rapport massique CaO/SiO₂ étant compris entre 0,2 et 7,
le rapport massique TiO₂/CaO étant compris entre 0,2 et 1,5.

2. Matériau selon la revendication immédiatement précédente, présentant une masse volumique relative supérieure ou égale à 90%.

3. Matériau selon l'une quelconque des revendications précédentes, présentant une taille moyenne de grains inférieure à 100 µm et supérieure à 0,5 µm.

4. Matériau selon l'une quelconque des revendications précédentes, présentant
- une teneur en oxyde de fer, exprimée sous la forme Fe₂O₃ supérieure à 88%; et/ou
- une teneur en CaO supérieure à 0,2% et inférieure à 4%; et/ou
- une teneur en SiO₂ supérieure à 0,2% et inférieure à 6% ; et/ou
- une teneur en TiO₂ supérieure à 0,1% et inférieure à 3% ; et/ou
- une teneur en Al₂O₃ supérieure à 0,1% et inférieure à 2,5% ; et/ou
- une teneur totale en TiO₂ + Al₂O₃ supérieure à 0,2% et inférieure à 2,5% ; et/ou
- un rapport massique CaO/SiO₂ supérieur à 0,4 et inférieur à 6,5 ; et/ou
- un rapport massique TiO₂/CaO supérieur à 0,3 et inférieur à 1,4 ; et/ou
- une teneur en constituants autres que les oxydes de fer, CaO, SiO₂, TiO₂ et Al₂O₃ inférieure à 4% ; et/ou
- une teneur en oxyde de manganèse, exprimée sous la forme MnO, supérieure à 0,1% et inférieure à 3%.

5. Matériau selon la revendication immédiatement précédente, présentant :
- une teneur en oxyde de fer, exprimée sous la forme Fe₂O₃ supérieure à 92%; et/ou
- une teneur en CaO supérieure à 0,3% et inférieure à 2%; et/ou
- une teneur en SiO₂supérieure à 0,4% et inférieure à 3% ; et/ou
- une teneur en TiO₂ supérieure à 0,3% et inférieure à 2,5% ; et/ou
- une teneur en Al₂O₃ inférieure à 1,5% ; et/ou
- une teneur totale en TiO₂ + Al₂O₃ supérieure à 0,3% et inférieure à 2% ; et/ou
- un rapport massique CaO/SiO₂ inférieur à 5 ; et/ou
- un rapport massique TiO₂/CaO supérieur à 0,5 et inférieur à 1,3 ; et/ou
- une teneur en constituants autres que les oxydes de fer, CaO, SiO₂, TiO₂ et Al₂O₃ inférieure à 2% ; et/ou
- une teneur en oxyde de manganèse, exprimée sous la forme MnO, supérieure à 0,2% et inférieure à 2%.

6. Matériau selon la revendication immédiatement précédente, présentant :
- une teneur en oxyde de fer, exprimée sous la forme Fe₂O₃ supérieure à 95%; et/ou
- une teneur en CaO inférieure à 1%; et/ou
- une teneur en SiO₂ supérieure à 0,7% et inférieure à 2% ; et/ou
- une teneur en TiO₂ supérieure à 0,5% et inférieure à 2% ; et/ou
- une teneur en Al₂O₃ inférieure à 1% ; et/ou
- une teneur totale en TiO₂ + Al₂O₃ supérieure à 0,4% ; et/ou
- un rapport massique CaO/SiO₂ inférieur à 3 ; et/ou
- un rapport massique TiO₂/CaO supérieur à 0,7 et inférieur à 1,2 ; et/ou
- une teneur en constituants autres que les oxydes de fer, CaO, SiO₂, TiO₂ et Al₂O₃ inférieure à 1% ; et/ou
- une teneur en oxyde de manganèse, exprimée sous la forme MnO, supérieure à 0,4% et inférieure à 1%.

7. Mélange particulaire comportant, en pourcentages massiques :
(a) plus de 60%, en masse, de particules présentant une taille supérieure ou égale à 50 µm, ou « particules d'agrégats », plus de 90% en masse desdites particules d'agrégats étant des particules en un matériau selon l'une quelconque des revendications précédentes ;
(b) plus de 15%, en masse, de particules présentant une taille inférieure à 50 µm, ou « particules matricielles » ;
le mélange particulaire comportant plus de 5% en masse de particules d'agrégats présentant une taille supérieure à 1 mm et, de préférence, inférieure à 15 mm.

8. Mélange particulaire selon la revendication immédiatement précédente, plus de 60% des particules du mélange particulaire, en pourcentage massique, étant en un matériau selon l'une quelconque des revendications 1 à 6.

9. Mélange particulaire selon la revendication immédiatement précédente, plus de 90% des particules du mélange particulaire, en pourcentage massique, étant en un matériau selon l'une quelconque des revendications 1 à 6.

10. Mélange particulaire selon l'une quelconque des trois revendications immédiatement précédentes, dans lequel la fraction matricielle, constituée des particules matricielles, présente l'analyse chimique suivante, en pourcentages massiques sur la base des oxydes de la fraction matricielle :
- oxyde(s) de fer, exprimé sous la forme Fe₂O₃ ≥ 85%,
- CaO ≤ 6%, et
- SiO₂ : 0,1% - 6%, et
- TiO₂ : 0,1% - 6%, et
- Al₂O₃ ≤ 2%, et
- autres oxydes : ≤ 5%,
le rapport massique CaO/SiO₂ étant inférieur à 1, et
le rapport massique CaO/TiO₂ étant inférieur à 1.

11. Mélange particulaire selon l'une quelconque des revendications 7 à 9, dans lequel la fraction matricielle, constituée des particules matricielles, présente l'analyse chimique suivante, en pourcentages massiques sur la base des oxydes de la fraction matricielle :
- oxyde(s) de fer, exprimé sous la forme Fe₂O₃ ≥ 85%,
- CaO : 0,1% - 6%, et
- SiO₂ : 0,1% - 6%, et
- 0,05% < TiO₂, et
- 0 ≤ Al₂O₃ et
- TiO₂ + Al₂O₃ ≤ 3%, et
- autres oxydes ≤ 5%,
le rapport massique CaO/SiO₂ étant compris entre 0,2 et 7, et
le rapport massique TiO₂/CaO étant compris entre 0,2 et 1.

12. Produit fritté obtenu par frittage d'un mélange particulaire selon l'une quelconque des cinq revendications immédiatement précédentes.

13. Unité de stockage thermique comportant des éléments de stockage d'énergie calorifique, lesdits éléments de stockage d'énergie calorifique étant en un produit selon la revendication immédiatement précédente.

14. Unité de stockage thermique selon la revendication immédiatement précédente, dans laquelle les éléments de stockage d'énergie calorifique sont conformés et agencés de manière que ladite unité de stockage thermique présente une fraction volumique de vide inférieure ou égale à 60%.

15. Ensemble comportant :
- une unité de stockage thermique selon l'une quelconque des deux revendications immédiatement précédentes, et
- un dispositif de circulation d'un fluide caloporteur à travers ladite unité de stockage thermique.

## Patentansprüche

1. Gesinterter Werkstoff mit der folgenden chemischen Zusammensetzung in Gewichtsprozent:
- Eisenoxid(e), ausgedrückt als Fe₂O₃ ≥ 85%
- CaO: 0,1%-6% und
- SiO₂: 0,1%-6% und
- 0,05% ≤ TiO₂ und
- 0 ≤ Al₂O₃ und
- TiO₂ + Al₂O₃ ≤ 3% und
- andere Bestandteile als Eisenoxide, CaO, SiO₂, TiO₂ und Al₂O₃: ≤ 5%,
wobei das Gewichtsverhältnis CaO/SiO₂ zwischen 0,2 und 7 liegt,
wobei das Gewichtsverhältnis TiO₂/CaO zwischen 0,2 und 1,5 liegt.

2. Werkstoff nach dem unmittelbar vorhergehenden Anspruch mit einer spezifischen Dichte von mehr als oder gleich 90%.

3. Werkstoff nach einem der vorhergehenden Ansprüche mit einer mittleren Korngröße von weniger als 100 µm und mehr als 0,5 µm.

4. Werkstoff nach einem der vorhergehenden Ansprüche, der Folgendes aufweist:
- einen Gehalt an Eisenoxid, ausgedrückt als Fe₂O₃, von mehr als 88% und/oder
- einen Gehalt an CaO von mehr als 0,2% und weniger als 4% und/oder
- einen Gehalt an SiO₂ von mehr als 0,2% und weniger als 6% und/oder
- einen Gehalt an TiO₂ von mehr als 0,1% und weniger als 3% und/oder
- einen Gehalt an Al₂O₃ von mehr als 0,1% und weniger als 2,5% und/oder
- einen Gesamtgehalt an TiO₂ + Al₂O₃ von mehr als 0,2% und weniger als 2,5% und/oder
- ein Gewichtsverhältnis CaO/SiO₂ von mehr als 0,4 und weniger als 6,5 und/oder
- ein Gewichtsverhältnis TiO₂/CaO von mehr als 0,3 und weniger als 1,4 und/oder
- einen Gehalt an anderen Bestandteilen als Eisenoxide, CaO, SiO₂, TiO₂ und Al₂O₃ von weniger als 4% und/oder
- einen Gehalt an Manganoxid, ausgedrückt als MnO, von mehr als 0,1% und weniger als 3%.

5. Werkstoff nach dem unmittelbar vorhergehenden Anspruch, der Folgendes aufweist:
- einen Gehalt an Eisenoxid, ausgedrückt als Fe₂O₃, von mehr als 92% und/oder
- einen Gehalt an CaO von mehr als 0,3% und weniger als 2% und/oder
- einen Gehalt an SiO₂ von mehr als 0,4% und weniger als 3% und/oder
- einen Gehalt an TiO₂ von mehr als 0,3% und weniger als 2,5% und/oder
- einen Gehalt an Al₂O₃ von weniger als 1,5% und/oder
- einen Gesamtgehalt an TiO₂ + Al₂O₃ von mehr als 0,3% und weniger als 2% und/oder
- ein Gewichtsverhältnis CaO/SiO₂ von weniger als 5 und/oder
- ein Gewichtsverhältnis TiO₂/CaO von mehr als 0,5 und weniger als 1,3 und/oder
- einen Gehalt an anderen Bestandteilen als Eisenoxide, CaO, SiO₂, TiO₂ und Al₂O₃ von weniger als 2% und/oder
- einen Gehalt an Manganoxid, ausgedrückt als MnO, von mehr als 0,2% und weniger als 2%.

6. Werkstoff nach dem unmittelbar vorhergehenden Anspruch, der Folgendes aufweist:
- einen Gehalt an Eisenoxid, ausgedrückt als Fe₂O₃, von mehr als 95% und/oder
- einen Gehalt an CaO von weniger als 1% und/oder
- einen Gehalt an SiO₂ von mehr als 0,7% und weniger als 2% und/oder
- einen Gehalt an TiO₂ von mehr als 0,5% und weniger als 2% und/oder
- einen Gehalt an Al₂O₃ von weniger als 1% und/oder
- einen Gesamtgehalt an TiO₂ + Al₂O₃ von mehr als 0,4% und/oder
- ein Gewichtsverhältnis CaO/SiO₂ von weniger als 3 und/oder
- ein Gewichtsverhältnis TiO₂/CaO von mehr als 0,7 und weniger als 1,2 und/oder
- einen Gehalt an anderen Bestandteilen als Eisenoxide, CaO, SiO₂, TiO₂ und Al₂O₃ von weniger als 1% und/oder
- einen Gehalt an Manganoxid, ausgedrückt als MnO, von mehr als 0,4% und weniger als 1%.

7. Partikuläres Gemisch, umfassend in Gewichtsprozent:
(a) mehr als 60 Gew.-% Partikel mit einer Größe von mehr als oder gleich 50 µm oder "Aggregatpartikel", wobei mehr als 90 Gew.-% dieser Aggregatpartikel Partikel aus einem Werkstoff nach einem der vorhergehenden Ansprüche sind;
(b) mehr als 15 Gew.-% Partikel mit einer Größe von weniger als 50 µm oder "Matrixpartikel";
wobei das partikuläre Gemisch mehr als 5 Gew.-% Aggregatpartikel mit einer Größe von mehr als 1 mm und vorzugsweise weniger als 15 mm umfasst.

8. Partikuläres Gemisch nach dem unmittelbar vorhergehenden Anspruch, wobei mehr als 60% der Partikel des partikulären Gemischs, in Gewichtsprozent, aus einem Werkstoff nach einem der Ansprüche 1 bis 6 bestehen.

9. Partikuläres Gemisch nach dem unmittelbar vorhergehenden Anspruch, wobei mehr als 90% der Partikel des partikulären Gemischs, in Gewichtsprozent, aus einem Werkstoff nach einem der Ansprüche 1 bis 6 bestehen.

10. Partikuläres Gemisch nach einem der drei unmittelbar vorhergehenden Ansprüche, in dem die aus Matrixpartikeln bestehende Matrixfraktion die folgende chemische Analyse, in Gewichtsprozenten bezogen auf die Oxide der Matrixfraktion, aufweist:
- Eisenoxid(e), ausgedrückt als Fe₂O₃ ≥ 85%,
- CaO ≤ 6% und
- SiO₂: 0,1%-6% und
- TiO₂: 0,1%-6% und
- Al₂O₃ ≤ 2% und
- andere Oxide: ≤ 5%,
wobei das Gewichtsverhältnis CaO/SiO₂ kleiner als 1 ist und
das Gewichtsverhältnis CaO/TiO₂ kleiner als 1 ist.

11. Partikuläres Gemisch nach einem der Ansprüche 7 bis 9, in dem die aus Matrixpartikeln bestehende Matrixfraktion die folgende chemische Analyse, in Gewichtsprozenten bezogen auf die Oxide der Matrixfraktion, aufweist:
- Eisenoxid(e), ausgedrückt als Fe₂O₃ ≥ 85%,
- CaO: 0,1%-6% und
- SiO₂: 0,1%-6% und
- 0,05% < TiO₂ und
- 0 ≤ Al₂O₃ und
- TiO₂ + Al₂O₃ ≤ 3% und
- andere Oxide ≤ 5%,
wobei das Gewichtsverhältnis CaO/SiO₂ zwischen 0,2 und 7 liegt und
das Gewichtsverhältnis TiO₂/CaO zwischen 0,2 und 1 liegt.

12. Sinterprodukt, das durch Sintern eines partikulären Gemischs nach einem der fünf unmittelbar vorhergehenden Ansprüche erhalten wird.

13. Wärmespeichereinheit, umfassend Wärmeenergiespeicherelemente, wobei die Wärmeenergiespeicherelemente aus einem Produkt nach dem unmittelbar vorhergehenden Anspruch bestehen.

14. Wärmespeichereinheit nach dem unmittelbar vorhergehenden Anspruch, wobei die Wärmeenergiespeicherelemente so gebildet und angeordnet sind, dass die Wärmespeichereinheit einen Hohlraumvolumenanteil von weniger als oder gleich 60% aufweist.

15. Baugruppe, umfassend:
- eine Wärmespeichereinheit nach einem der beiden unmittelbar vorhergehenden Ansprüche und
- eine Vorrichtung zur Umführung eines Wärmeübertragungsfluids durch die Wärmespeichereinheit.

## Claims

1. A sintered material exhibiting the following chemical composition, as percentages by weight:
- iron oxide(s), expressed in the Fe₂O₃ form, ≥ 85%
- CaO: 0.1% - 6%, and
- SiO₂: 0.1% - 6%, and
- 0.05% ≤ TiO₂, and
- 0 ≤ Al₂O₃, and
- TiO₂ + Al₂O₃ ≤ 3%, and
- constituents other than iron oxides, CaO, SiO₂, TiO₂ and Al₂O₃: ≤ 5%,
the CaO/SiO₂ ratio by weight being between 0.2 and 7,
the TiO₂/CaO ratio by weight being between 0.2 and 1,5.

2. The material as claimed in the immediately preceding claim, exhibiting a relative density of greater than or equal to 90%.

3. The material as claimed in either one of the preceding claims, exhibiting a mean grain size of less than 100 µm and greater than 0.5 µm.

4. The material as claimed in any one of the preceding claims, exhibiting:
- a content of iron oxide, expressed in the Fe₂O₃ form, of greater than 88%; and/or
- a content of CaO of greater than 0.2% and less than 4%; and/or
- a content of SiO₂ of greater than 0.2% and less than 6%; and/or
- a content of TiO₂ of greater than 0.1% and less than 3%; and/or
- a content of Al₂O₃ of greater than 0.1% and less than 2.5%; and/or
- a total content of TiO₂ + Al₂O₃ of greater than 0.2% and less than 2.5%; and/or
- a CaO/SiO₂ ratio by weight of greater than 0.4 and less than 6.5; and/or
- a TiO₂/CaO ratio by weight of greater than 0.3 and less than 1.4; and/or
- a content of constituents other than iron oxides, CaO, SiO₂, TiO₂ and Al₂O₃ of less than 4%; and/or
- a content of manganese oxide, expressed in the MnO form, of greater than 0.1% and less than 3%.

5. The material as claimed in the immediately preceding claim, exhibiting:
- a content of iron oxide, expressed in the Fe₂O₃ form, of greater than 92%; and/or
- a content of CaO of greater than 0.3% and less than 2%; and/or
- a content of SiO₂ of greater than 0.4% and less than 3%; and/or
- a content of TiO₂ of greater than 0.3% and less than 2.5%; and/or
- a content of Al₂O₃ of less than 1.5%; and/or
- a total content of TiO₂ + Al₂O₃ of greater than 0.3% and less than 2%; and/or
- a CaO/SiO₂ ratio by weight of less than 5; and/or
- a TiO₂/CaO ratio by weight of greater than 0.5 and less than 1.3; and/or
- a content of constituents other than iron oxides, CaO, SiO₂, TiO₂ and Al₂O₃ of less than 2%; and/or
- a content of manganese oxide, expressed in the MnO form, of greater than 0.2% and less than 2%.

6. The material as claimed in the immediately preceding claim, exhibiting:
- a content of iron oxide, expressed in the Fe₂O₃ form, of greater than 95%; and/or
- a content of CaO of less than 1%; and/or
- a content of SiO₂ of greater than 0.7% and less than 2%; and/or
- a content of TiO₂ of greater than 0.5% and less than 2%; and/or
- a content of Al₂O₃ of less than 1%; and/or
- a total content of TiO₂ + Al₂O₃ of greater than 0.4%; and/or
- a CaO/SiO₂ ratio by weight of less than 3; and/or
- a TiO₂/CaO ratio by weight of greater than 0.7 and less than 1.2; and/or
- a content of constituents other than iron oxides, CaO, SiO₂, TiO₂ and Al₂O₃ of less than 1%; and/or
- a content of manganese oxide, expressed in the MnO form, of greater than 0.4% and less than 1%.

7. A particulate mixture, comprising, as percentages by weight:
(a) more than 60%, by weight, of particles exhibiting a size of greater than or equal to 50 µm, or "aggregate particles", more than 90% by weight of said aggregate particles being particles made of a material as claimed in any one of the preceding claims;
(b) more than 15%, by weight, of particles exhibiting a size of less than 50 µm, or "matrix particles";
the particulate mixture comprising more than 5% by weight of aggregate particles exhibiting a size of greater than 1 mm and preferably of less than 15 mm.

8. The particulate mixture as claimed in the immediately preceding claim, more than 60% of the particles of the particulate mixture, as percentage by weight, being made of a material as claimed in any one of claims 1 to 6.

9. The particulate mixture as claimed in the immediately preceding claim, more than 90% of the particles of the particulate mixture, as percentage by weight, being made of a material as claimed in any one of claims 1 to 6.

10. The particulate mixture as claimed in any one of the three immediately preceding claims, in which the matrix fraction, formed of the matrix particles, exhibits the following chemical analysis, as percentages by weight based on the oxides of the matrix fraction:
- iron oxide(s), expressed in the Fe₂O₃ form, ≥ 85%,
- CaO ≤ 6%, and
- SiO₂: 0.1% - 6%, and
- TiO₂: 0.1% - 6%, and
- Al₂O₃ ≤ 2%, and
- other oxides: ≤ 5%,
the CaO/SiO₂ ratio by weight being less than 1, and
the CaO/TiO₂ ratio by weight being less than 1.

11. The particulate mixture as claimed in any one of claims 7 to 9, in which the matrix fraction, formed of the matrix particles, exhibits the following chemical analysis, as percentages by weight based on the oxides of the matrix fraction:
- iron oxide(s), expressed in the Fe₂O₃ form, ≥ 85%,
- CaO: 0.1% - 6%, and
- SiO₂: 0.1% - 6%, and
- 0.05% < TiO₂, and
- 0 ≤ Al₂O₃, and
- TiO₂ + Al₂O₃ ≤ 3%, and
- other oxides ≤ 5%,
the CaO/SiO₂ ratio by weight being between 0.2 and 7, and
the TiO₂/CaO ratio by weight being between 0.2 and 1.

12. A sintered product obtained by sintering a particulate mixture as claimed in any one of the five immediately preceding claims.

13. A thermal storage unit comprising heat energy storage elements, said heat energy storage elements being made of a product as claimed in the immediately preceding claim.

14. The thermal storage unit as claimed in the immediately preceding claim, in which the heat energy storage elements are shaped and arranged so that said thermal storage unit exhibits a void volume fraction of less than or equal to 60%.

15. An assembly comprising:
- a thermal storage unit as claimed in either one of the two immediately preceding claims, and
- a device for circulation of a heat-exchange fluid through said thermal storage unit.
